# EUROPEAN PATENT APPLICATION

(11) **EP 4 607 387 A1**
(43) Date of publication of application: **27.08.2025**
(21) Application number: 24159739.2
(22) Date of filing: 26.02.2024
(51) Int. Cl.: G06F 21/57, H04L 9/40

(54) **METHOD FOR MONITORING SECURITY POSTURE OF A TARGET SYSTEM**

(71) Applicant: Nagravision Sàrl, 1033 Cheseaux-sur-Lausanne (CH)
(72) Inventor: AMIET, Nils, 1033 Cheseaux sur Lausanne (CH); HAMIEL, Nathan, 1033 Cheseaux-sur-Lausanne (CH)
(74) Representative: Novagraaf International SA

(57) **Abstract**

The method includes the steps of:
- acquiring, by one or more agents (1100A, 1100B, 1100C), cryptography-related data elements from each of at least part of a plurality of computing devices (2100) of the target system (2000), each cryptography-related data element acquired from a computing device (2100) being indicative of cryptographic capabilities of the computing device (2100);
- by a data collection module (1000) in communication with the agents (1100A, 1100B, 1100C), collecting, from the agents, the cryptography-related data elements, checking if the cryptography-related data elements satisfy predetermined rules that are based on at least part of security recommendations, known cryptographic attacks and known vulnerabilities, and, based on the cryptography-related data elements and check results, determining information on the security posture of the target system (2000).

## Description

### TECHNICAL FIELD

The present disclosure relates to a method and system for monitoring a security posture of a computing system.

### BACKGROUND

Many companies and/or organizations deploy IT (Information Technology) systems including computing devices. A computing device may refer to a computer, a server, or a user device (e.g., a mobile phone, smartphone, personal digital assistant (PDA), PC, laptop and/or touch screen computer, tablet, multimedia device, etc.). A computing device may have capability to operate in Internet of Things (IoT) network which is a scenario in which objects may be provided with the ability to transfer data over a network without requiring human-to-human or human-to-computer interaction. A computing device may also utilize cloud. In some applications, a computing device may comprise a portable device with radio parts (such as a watch, earphones or eyeglasses) and the computation may be carried out in another computing device or in the cloud.

In an organization's IT system, the computing devices are generally networked or connected to a network such as an internal network of the organization.

For security reasons, the computing devices may be provided with security systems including cryptographic hardware and/or software means. An organization may have a wide range of security systems running on the computing devices of its IT system but may not be aware of what is being actually used.

Quantum computers have the potential to perform computations that are currently impractical or impossible for less powerful computers. They pose a significant threat to classical cryptography due to their ability to solve certain mathematical problems much more efficiently than classical computers. This threat has led to the development of post-quantum cryptography, also termed as quantum-resistant cryptography, which aims to develop cryptographic systems that are secure against both quantum and classical computers. These new systems are based on mathematical problems that are believed to be too hard for quantum computers to solve efficiently.

Future attacks based on quantum computing will not announce themselves. In this context, a key challenge for organizations is to assess the cryptographic systems and/or algorithms that are currently in use in their IT systems and determine a security posture or risk landscape of these IT systems, i.e., if they have security weaknesses and/or vulnerabilities. The assessment of the cryptographic systems and/or algorithms in use in a target system is an important first step to get prepared to the threat posed by quantum computers well in advance.

Therefore, there is a need for assessing corporate risk regarding quantum attacks on a network. In the context of cryptography and network security, it is desired to monitor the computing devices of a target system and the services running on these computing devices, to assess a risk landscape or security posture of the target system more accurately so as to take necessary measures to mitigate potential risks.

### SUMMARY

The present disclosure concerns a method for monitoring security posture of a target system including a plurality of computing devices, including the steps of:
- acquiring, by at least one agent, cryptography-related data elements from each of at least part of the plurality of computing devices, each cryptography-related data element acquired from one of the plurality of computing devices being indicative of cryptographic capabilities of the computing device;
- by a data collection module, in communication with the at least one agent:
   . collecting, from the at least one agent, the cryptography-related data elements,
   . checking if the cryptography-related data elements satisfy predetermined rules that are based on at least part of security recommendations, known cryptographic attacks and known vulnerabilities, and
   . based on the cryptography-related data elements and check results, determining information on the security posture of the target system.

The present method allows to collect cryptography-related data elements (e.g., certificates, public keys, host keys, ...) from a plurality of computing devices of a target or monitored system by means of one or more agents. The cryptography-related data elements found by the agents are transmitted to a collector that performs security checks on the collected cryptography-related data elements to verify their compliance with predetermined rules. These rules can be based on known security recommendations, known cryptographic attacks or threats and/or known cryptographic vulnerabilities. The security recommendations may be aggregated or combined for example from various standards or guidelines released by certification bodies and/or organizations. The predetermined rules can be pre-stored in a database. In this way, the cryptography-related data elements can be enhanced, enriched with security check results, which allows to determine a security posture or security status or cryptographic status or risk landscape of the target system. As a result, the cryptographic weaknesses or vulnerabilities of the target system can be globally evaluated.

In an embodiment, the at least one agent including at least one network agent, the step of acquiring includes:
- querying, by the at least one network agent, each of at least part of the plurality of computing devices through a network, and
- in response, receiving data including the cryptography-related data elements.

For example, the at least one network agent queries the computing devices at predetermined network addresses.

The network agent may query predetermined servers running on the computing devices, each server being reachable at a specific network address and listening for incoming connections on a specific port.

In an embodiment, the target system including a computer network having a set of predetermined available network addresses that can be assigned on the computer network, the at least one network agent queries all the available network addresses of the set.

In this way, the agent performs a network scan of all the network addresses of the set of predetermined available network addresses on the target system, for example a network scan on all IP addresses and on one or more predetermined ports on the target system. This may allow to detect a forgotten service or application software running on a computing device, that can be a security breach for the target system.

In an embodiment, the at least one agent including at least one electronic file agent running on at least one computing device, the step of acquiring includes:
- scanning electronic files in the computing device to acquire the cryptography-related data elements from the scanned electronic files.

In an embodiment, the at least one agent including at least one source code agent running on at least one computing device, the step of acquiring includes:
- scanning source code in the computing device to acquire the cryptography-related data elements from the scanned source code.

In an embodiment, the method may comprise a step of sending a request for monitoring the target system from a user device to the at least one agent, and wherein the at least one agent performs the step of acquiring upon reception of said request.

Advantageously, the request may include said predetermined network addresses of the plurality of computing devices.

In an embodiment, the method may include a step, performed by the data collection module, of determining a plurality of security metrics based on the collected cryptography-related data elements and check results to determine said information on the security posture of the target system.

For example, the step of determining security metrics may include computing a score indicative of how the target system is resistant to security threats from a quantum computing device.

In an embodiment, the method may include a step of storing in a database:
- the cryptography-related data elements,
- metadata related to said cryptography-related data elements, the metadata related to one cryptography-related data element including information for identifying the corresponding computing device and/or locating the corresponding computing device on the target system and time information,
- the check results, and
- the information on the security posture of the target system.

The method may further include including the steps of:
transmitting data from the database to a user device, through a communication interface; and
displaying said data through a user interface of the user device.

The present disclosure also concerns a system for monitoring security posture of a target system including a plurality of computing devices, said system comprising means for carrying out the steps of the method previously defined.

The system may comprise
- at least one agent configured to acquire, cryptography-related data elements from each of at least part of the plurality of computing devices, each cryptography-related data element acquired from one of the plurality of computing devices being indicative of cryptographic capabilities of the computing device;
- a data collection module, in communication with the at least one agent, configured to
   . collect, from the at least one agent, the cryptography-related data elements,
   . check if the cryptography-related data elements satisfy predetermined rules that are based on at least part of security recommendations, known cryptographic attacks and known vulnerabilities, and
   . based on the cryptography-related data elements and check results, determine information on the security posture of the target system.

The present disclosure also concerns a computer program comprising instructions to cause the system previsouly defined to execute the steps of the method previously defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a system for monitoring a security posture of a target system including a plurality of computing devices, according to an embodiment.
Figure 2 shows a flow chart of a method for monitoring a security posture of a target system including a plurality of computing devices, according to an embodiment.
Figures 3 to 5 show examples of information presented on a display device and representing a security posture of the target system, according to an embodiment.

### DETAILED DESCRIPTION

The following detailed description describes various features and functions of the disclosed systems and methods with reference to the accompanying figures. In the figures, similar symbols identify similar components, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

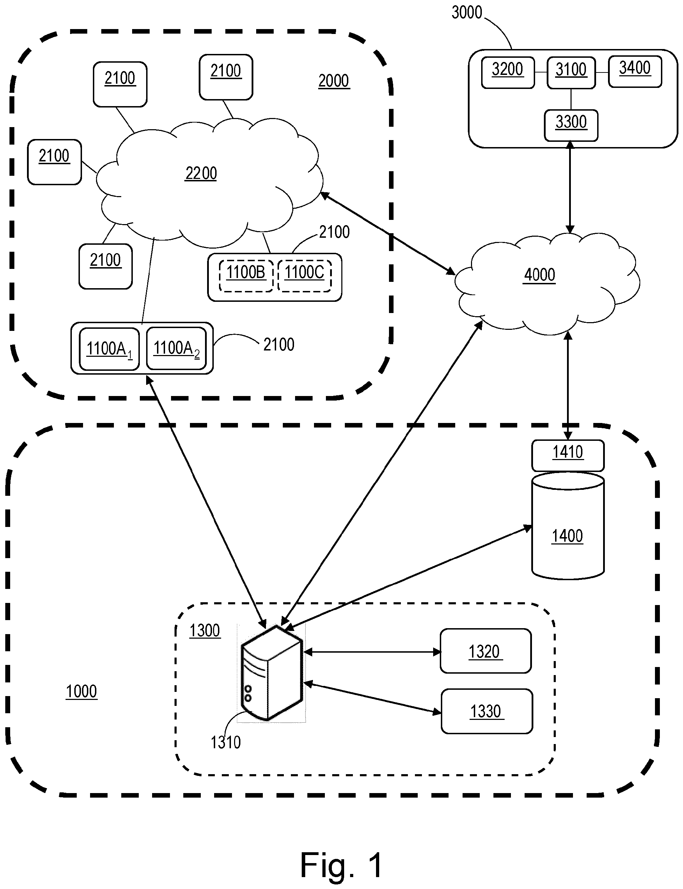

Figure 1 shows a monitoring system 1000 for monitoring a security posture of a target system 2000 including a plurality of computing devices 2100. The monitoring system 1000 has the role of monitoring cryptographic vulnerabilities or weaknesses of the target system 2000. In other words, it is configured to monitor and/or determine a security status or posture of the target system 2000 for example to assess a risk landscape of the target system 2000.

The computing devices 2100 may be of any type of computing devices, including servers, computers, laptops, PCs, desktops, smartphones, tablets, IoT devices, etc.

The target system 2000 may include a network 2200, such as a computer network, comprising the computing devices 2100. The network 2200 may connect the computing devices 2100 together and/or the computing devices 2100 may be connected to the network 2200. The computing devices 2100 may be connected by some physical channel(s) (for example Ethernet cable, Wi-Fi, etc.).

Each computing device 2100 is assigned at least one network address, including for example an IP address and optionally an associated port number, on that network 2200.

To communicate with one another, the computing devices 2100 of the network 2200 are configured to send packets such as TCP/IP packets on the network. A TCP/IP packet contains at least:
- a source IP address;
- a destination IP address; and
- a destination port, that is a number between 0 and 65535.

The port(s) of a computing device 2100 can be used by software application(s) and/or service(s) running on the computing device 2100 to establish connections and/or exchange data over network 2200. The port may be considered as a part of a network address. In other words, a network address may include an IP address and an associated port (i.e., a port number).

The computer network 2200 has a set of predetermined available network addresses, including for example predetermined available IP addresses and optionally one or more associated ports, that can be assigned on the computer network 2200. As an illustrative and non-limitative example, the network 2200 may include the following 255 IP addresses:
192.168.0.0, 192.168.0.1, 192.168.0.2, 192.168.0.3, ... , 192.168.0.254.

The monitoring system 1000 includes one or more agents 1100 and a data collection module or system 1300.

Each agent 1100 acts as a scanner. It has the function of performing scans on one or more computing devices 2100 to acquire cryptography-related data elements that are indicative of cryptographic capabilities of the computing devices 2100. A purpose of the scans is to extract information related to how cryptography is used by the computing devices 2100.

Each cryptographic-related data element obtained from a specific computing device 2100 is indicative of cryptographic means used by said computing device 2100. The cryptographic-related data elements may include cryptographic artifacts. The terms "cryptographic artifacts" refer to the various elements or components used in cryptography (keys, algorithms, certificates, protocols, crypto libraries, tokens, digital signatures, hash functions, ...). The cryptography-related data elements acquired or obtained from a specific computing device 2100 may include any data element or information that is security relevant, in other words contributes to or specifies a security status of said computing device 2100. As illustrative and non-limitative examples, they may include at least part of the following elements or items regarding the computing device 2100: supported TLS (Transport Layer Security) versions, supported cipher suite(s), raw digital certificate(s), certificate attributes (e.g., validity starting date, validity expiry date, raw public key, etc.), key attributes (length, key type (RSA, DSA, EdSA, etc.), etc.), server name and version, supported authentication method(s), supported encryption algorithm(s), supported key exchange algorithm(s), supported MAC algorithm(s), etc.

The agents 1100 may be of different types. They may include:
- one or more network scanning agents, or network scanners, 1100A;
- one or more file scanning agents, or file scanners, 1100B; and/or
- one or more source code scanning agents, or source code scanners, 1100C.

A network scanning agent or network scanner 1100A is configured to perform network scans on at least part of the computing devices 2100. The agent 1100A may be installed a computing device. This computing device, also referred as the "network scanner", is part of the monitoring system 1000. In an embodiment, it may be one of the computing devices 2100 connected to the network 2200 of the target system 2000, as illustrated in figure 1. Alternatively, the network scanner may be external to the network 2200 and connected to this network 2200 by a communication link and/or network. A network scan is a process where the network scanner 1100A queries a scanned computing device 2100 of the network 2200 and, in response, receives data from the scanned computing device 2100. The received data may include cryptography-related data elements that are indicative of cryptographic capabilities of the scanned computing device 2100.

A file scanning agent or file scanner 1100B is configured to perform a file scan for example a system file scan on a computing device 2100. The agent 1100B may be installed on the computing device 2100 and/or have access to the files of the computing device 2100. A file scan is a process where the agent 1100B examines files on a computing device 2100 here for the purpose of detecting or identifying cryptography-related data elements that are indicative of cryptographic capabilities of the computing device 2100. In an embodiment the file scanning agent 1100B is configured to perform a system file scan on the computing device 2100 to examine system files on the computing device 2100 for the purpose of detecting, identifying cryptography-related data elements indicative of the cryptographic capabilities of the computing device 2100. The system files may be part of an operating system (OS) of the computing device 2100 or essential software that the OS relies on for its operation, like executable files, configuration files, library files, driver files, boot files, kernel files, system databases and repositories.

Alternatively, the file scanning agent 1100B may be configured to scan all files on the computing device 2100, at the expense of more time to perform the scan.

Optionally, an operator or user could define which file directories on the computing device 2100 should be scanned by configuring scan adjustment parameters or scan settings. In this way, the scan settings can indicate if every file has to be scanned or if just a few specific directories have to be scanned. The scan settings could for example indicate to:
- only scan files below a predetermined threshold file size;
- only scan files in specific predetermined directories, A, B, C, etc.;
- only scan files with specific predetermined extensions (e.g., .pem, .der, .crt, .pub, executable files, .so., etc.).

A source code scanning agent or scanner 1100C is configured to perform a source code scan on a computing device 2100. The agent 1100C may be installed on the computing device 2100 and/or have access to the source code of the computing device 2100. A source code scan is a process where the agent 1100C analyses the source code of a program or application here for the purpose of detecting or identifying cryptography-related data elements indicative of cryptographic capabilities of the computing device 2100.

The scanning agents 1100A, 1100B, 1100C may be implemented with software and/or hardware means.

In an embodiment, the monitoring system 1000 may only include one or more agents of one type, for example one or more network scanning agents 1100A. In other embodiments, the monitoring system 1000 may include agents of different types, for example at least one network agent 1100A, a set of file scanning agents 1100B (e.g., one file scanning agent on each computing device 2100), and a set of source code scanning agents 1100C (e.g., one source code scanning agent on each computing device 2100).

The data collection module or system 1300 is in communication with the scanning agents 1100A, 1100B and 1100C. The communication between the data collection module 1300 and the scanning agents 1100A, 1100B and 1100C is established through at least one network (e.g., a communication network 4000 such as the Internet and the network 2200) and/or at least one communication channel. The data collection module or system 1300 has the role of collecting the cryptography-related data elements of the plurality of computing devices 2100 of the target system 2000, which are acquired by the scanning agents 1100A, 1100B and 1100C. The data collection module 1300 may comprise a collector 1310 responsible for collecting or acquiring the cryptography-related data elements of the computing devices 2100. The collector 1310 is in communication with the scanning agents 1100A, 1100B and 1100C through said least one network.

The data collection module 1300 has also the role of performing security checks. For that purpose, the data collection module 1300 may comprise a security check engine 1320 connected to the collector 1310 and configured to carry out the security checks.

The security checks may be processes where the data collection module 1300 checks if cryptography-related data elements acquired through the scanning agents 1100A, 1100B and 1100C satisfy predetermined rules, also termed as security rules. These predetermined rules can be based on security recommendations, known cryptographic attacks and/or known vulnerabilities. They can be stored in a database. They can also be updated in the database. This database may be internal or external to the security check engine 1320.

The security recommendations may be based on or be compliant with guidelines and/or standards released by certification bodies and/or organizations like NIST (National Institute of Standards and Technology) in USA, BSI (British Standards Institution) group in UK, and/or any other standards body producing security recommendations and/or publications. As illustrative and non-limitative examples, the security recommendations may be based on:
- BSI Technical Guidelines, Cryptography Mechanisms: Recommendations and Key Lengths, BSI TR-02102-1, Version 2023-01 of January 9, 2023; and
- NIST SP 800-57 Part 1 Rev. 5, Recommendation for Key Management: Part 1 - General, May 2020.

A predetermined rule based on one or more security recommendation(s) refers to compliance with said security recommendation(s).

A cryptographic attack is a method used to undermine the effectiveness of a cryptographic system, for example by deciphering or breaking the encryption without having access to the secret key. A vulnerability refers to a weakness or flaw in a cryptographic system or element such as an algorithm or a cryptographic key. There are many known cryptographic attacks and vulnerabilities in cryptography. A predetermined rule based on a known cryptographic attack may specify that a cryptography-related data element to be checked should be resistant to said known cryptographic attack. A predetermined rule based on a known vulnerability may specify that a cryptography-related data element does not encompass or include said known vulnerability. As illustrative and non-limitative examples, security checks can be performed on RSA (Rivest-Shamir-Adleman) keys to verify if the RSA keys are resistant to the following known threats corresponding to cryptographic attacks or vulnerabilities: Fermat attack, ROCA attack, shared primes, small factors, invalid key parameters, unusual RSA exponent, Debian weak keys, Pollard p-1 attack, low hamming weight attack, key generated with unseeded PRNG test, etc.

The data collection module 1300 may further have the function of determining information on a security posture of the target system 2000 based on the cryptography-related data elements acquired from the computing devices 2100 and associated check results (i.e., information on results of the security checks carried out on said cryptography-related data elements), as will be described in more detail in the description of the method. The determination of the security posture of the target system 2000 may be performed by a security posture determination engine 1330. The security posture determination engine 1330 may be connected to the security check engine 1320 and to the collector 1310.

The monitoring system 1000 may further comprise a database 1400 for storing information related to the target or monitored system 2000, that may comprise at least part of:
- cryptography-related data elements acquired from the computing devices 2100,
- metadata related to said cryptography-related data elements, where the metadata related to one cryptography-related data element may include information for identifying the corresponding computing device and/or locating the corresponding computing device on the target system 200 and/or time information,
- check results obtained by performing security checks on the cryptography-related data elements, and
- information on the security posture of the target system 2000.

The database 1400 may be provided with a communication interface 1410 configured to communicate with another entity, such as a user device 3000, through at least one network 4000 or communication channel, to transmit data from the database 1400 to the other entity.

A user device (or user equipment, user terminal) 3000 is a computing device. It may refer to, but is not limited to, the following types of devices: a computer, a PC, a server, a laptop, a touch screen computer, a mobile station (MS), a mobile phone, a radio cell phone, a smartphone, a personal digital assistant (PDA), a handset, a tablet, a VR/AR (Virtual Reality/Augmented Reality) device, and a multimedia device, as examples.

The user device 3000 may include at least one processor 3100, at least one memory or memory means 3200 connected to the processor 3100, and at least one communication interface 3300 connected to the processor 3100 and configured to communicate through at least one communication network 4000. The user device 100 also includes one or more user interfaces 3400 (e.g., keyboard, mouse, display device, etc.) connected to the processor 3100.

The network 4000 may be interconnected to the network 2200 of the target system 2000. Alternatively, the network 4000 may include the network 2200, or may correspond to the network 2200.

The user device 3000 is configured to send requests for scanning to the agents 1100A, 1100B, 1100C of the monitoring system 1000 (either directly or via the data collection system 1000 for example) and, after the scans have been performed, to receive data from the monitoring system 1000. It may also be configured to present the received data for example on a display device of its user interfaces 3400 to convey information of security posture of the target system 2000 to a user.

The user device 3000 may include and/or have access to one or more software applications and/or program instructions for controlling the agents 1100A, 1100B, 1100C, and receiving data from the database 1400, as will be described in more detail in the description of the method. The software applications and/or program instructions may be stored in the memory means 3200. Alternatively, they may be installed and executed on a remote server or cloud system which the user device 3000 has access to.

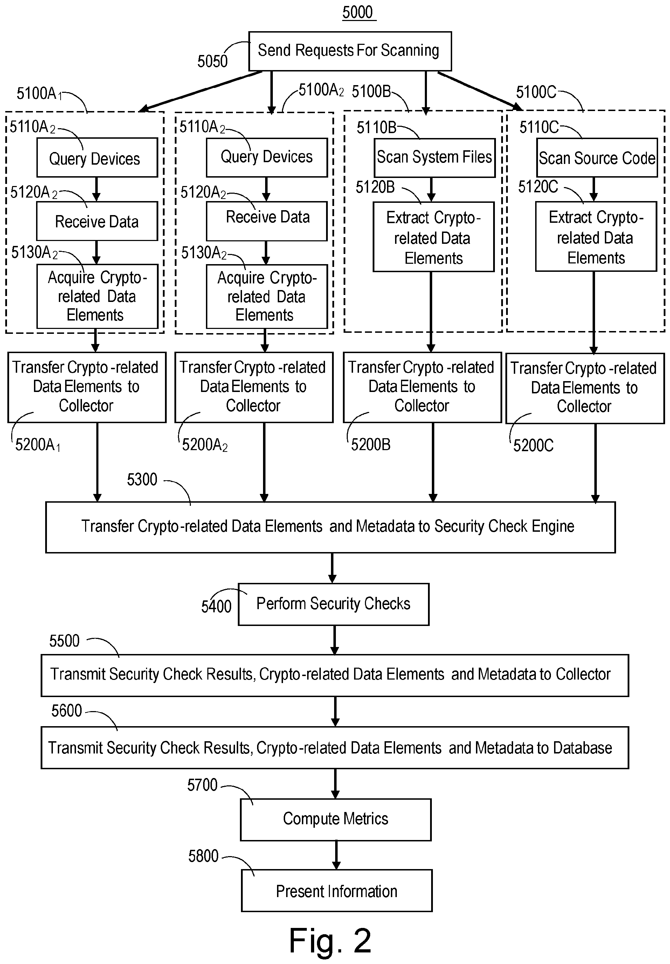

A method 5000 for monitoring a security posture of the target system 2000 will now be described according to an embodiment with reference to figure 2. It corresponds to an operation of the monitoring system 1000, according to an embodiment.

Let's consider that, in the present embodiment, the monitoring system 1000 has a TLS (Transport Layer Security) network scanning agent 1100A₁, a SSH (Secure Sockets Layer) network scanning agent 1100A₂, one system file scanning agent 1100B on each computing device 2100, and one source code scanning agent 1100B on each computing device 2100. Instead of two network scanning agents 1100A₁ and 1100A₂ (i.e., one for TLS and one for SSH), the monitoring system 1000 may include a combined TLS/SSH scanning agent 1100A combining the TLS network scanning and the SSH network scanning. The network scanning agents 1100A1 (TLS) and 1100A2 (SSH), or the combined TLS/SSH scanning agent 1100A, may be embedded in a computing device also referred as a network scanner. This network scanner may be part of the network 2200, and be one of the computing devices 2100, as illustrated in figure 1. Alternatively, it could be external to the network 2200 and connected to it through any appropriate communication link and/or network.

The present method applies similarly to a monitoring system 1000 having any other configuration of the scanning agents 1100A, 1100B and/or 1100C. For example, the monitoring system 1000 may only include one or more network scanners 1100A, or may include a system file scanning agent 1100B and/or a source code scanning agent 1100B only some of the computing devices 2100.

The method 5000 may include a first step 5050 of transmitting requests, or scan requests, for monitoring the target system 1000, more precisely for performing scans, from the user device 3000 to the agents 1100A₁, 1100A₂, 1100B, and 1100C, respectively, for example through the networks 4000, 2200.

The step 5050 may be performed under control of a scan command from the user device 300. The scan command may be manually entered by a user. It may be programmed and/or scheduled in advance and automatically executed at a programmed time. The scan command may also be periodically executed.

Upon reception of the scan requests, the agents 1100A₁, 1100A₂, 1100B and 1100C perform scans, in other words carry out scanning processes 5100A₁, 5100A₂, 5100B, and 5100C, that will be described below.

The scan requests received by the network agents 1100A₁, 1100A₂ may include predetermined network addresses of the plurality of computing devices 2100. A network address may include an IP address and optionally an associated port number. Different network addresses may include a same IP address associated with different port numbers, respectively.

The scanning process 5100A₁ performed by the TLS network scanning agent 1100A₁ includes, for each of part or all of the computing devices 2100 of the target system 2000, the steps of:
- querying 5110A₁ the computing device 2100, through the networks 4000, 2200, and
- in response, receiving 5120A₁ from the computing device 2100 data that may include cryptography-related data elements;
- extracting or acquiring 5130A₁ the cryptography-related data elements from the received data.

In the step 5110A₁, the agent 1100A₁ may query the computing device 2100 at a predetermined IP address, assigned to said computing device 2100 on the network 2200, and on one or more predetermined ports identified by respective port numbers. To query the computing device 2100 at its IP address on a predetermined port, the agent 1100A₁ may send data, for example a request for information, to this pair of IP address and port number. In response, in the step 5120A₁, the agent 1100A₁ receives data that may include cryptography-related data elements. The agent 1100A₁ uses the TLS protocol to carry out the steps 5110A₁ and 5120A₁.

The cryptography-related data elements obtained from the TLS network scanning performed by the agent 1100A₁ for the computing device 2100 may include part or all of the items or elements below:
- TLS versions supported by the computing device 2100;
- cipher suites supported by the computing device 2100;
- one or more raw digital certificate(s), such as a PEM-formatted certificate, of the computing device 2100;
- information and/or certificate attributes extracted from said certificate like: a serial number, issuer, validity period information, subject (i.e., the entity to which the certificate is issued), public key, indication on how the certificate is signed (self-signed or signed by a Certificate Authority (CA) and, if applicable, information on CA), additional information depending on the specific use case;
- information related to the public key of said certificate: key length, key type (e.g., RSA, DSA, EdDSA, etc.), additional information depending on the specific key type.

The scanning process 5100A₂ performed by the SSH network scanning agent 1100A₂ is similar to the scanning process 5100A₁ but differs from it by the fact that the agent 1100A₂ uses the SSH protocol instead of the TLS protocol. The computing devices 2100 scanned by the SSH network scanning agent 1100A₂ may include SSH servers and/or SSH computers used for logging into systems, executing commands remotely, and/or moving files from one machine to another.

The cryptography-related data elements obtained from the SSH network scanning performed by the agent 1100A₂ for the SSH server or computing device 2100 may include part or all of the items or elements below:
- a server banner that is a message sent by the SSH server or computing device 2100 including information about the SSH server 2100 such as a server name and information about the server's SSH software, such as the software version;
- authentication methods supported by the SSH server 2100;
- encryption algorithms supported by the SSH server 2100;
- Message Authentication Code (MAC) algorithms supported by the SSH server 2100;
- key exchange algorithms supported by the SSH server 2100;
- host key of the SSH server 2100 in raw format;
- information and/or host key attributes extracted from said host key like: key type, key length, additional attributes depending on the key type.

As previously indicated, the computer network 2200 of the target system 2000 has a range or set of predetermined available network addresses that can be assigned on the computer network 2200 to computing devices. In an embodiment, the network scanning agents 1100A₁, 1100A₂ (or the combined TLS/SSH network scanning agent 1100A) may query all the available network addresses of the set. Such a network scan that targets all the available IP addresses and associated predetermined ports on the network 2200 may reveal that a service or application that nobody is aware of is running on a computing device 2100 of the network 2200. For example, such circumstances may occur in an organization or company after a person who was aware of this service or application has left the organization or company.

In the present embodiment, the TLS network scanning process 5100A₁ and SSH network scanning process 5100A₂ are performed one by one, respectively by the agents 1100A₁ and 1100A₂. Advantageously, the scanning processes 5100A₁ and 5100A₂ may be combined or fused into an overall TLS/SSH network scanning process carried out by the TLS/SSH network scanning agent 1100. This allows to minimize the number of connections required to perform the network scans.

As an illustrative and non-limitative example, let's consider that the computer network 2200 has 255 available IP addresses 192.168.0.0 to 192.168.0.254, and includes two computing devices 2100, referred as A and B, and there is the following assignment of IP addresses:
- computing device A is assigned the IP address 192.168.0.40; and
- computing device B is assigned the IP address 192.168.0.41.

The network scanner including the TLS network scanning agent 1100A₁ and the SSH network scanning agent 1100A₂ (or the combined TLS/SSH scanning agent 1100A) may run on another computing device 2100, referred as C, connected to the network 2200 and having one of the above-listed IP addresses, for example 192.168.0.42, assigned.

During a TLS network scan, the network scanner C may send a TLS packet to each of the 255 IP addresses on the network 2200. In the same manner, during a SSH network scan, the network scanner C may send a SSH packet to each of the 255 IP addresses on the network 2200.

In this illustrative example, the network scanner C may send a TLS packet and a SSH packet to each of the 255 IP addresses 192.168.0.0 to 192.168.0.254, except for its own IP address (192.168.0.42) unless it makes sense for some reason.

For TLS, the TLS packets sent to the 255 IP addresses are for at least one port, for example for a single port like port 443. For SSH, the SSH packets sent to the 255 IP addresses are also for at least one port, for example for a single port like port 22.

Since there are only two computing devices A and B (other than the network scanner C) connected to the network 2200, the network scanner C may receive at most two responses for the TLS scan and two responses for the SSH scan.

If the computing device A has a TLS server listening on port 443, then the network scanner C receives a response from the computing device A. The same applies to the computing device B. But if there's no TLS server running on these computing devices A and B, then the network scanner C does not receive any response.

In the same manner, if the computing device A has a SSH server listening on port 22, then the network scanner C receives a response from the computing device A. The same applies to the computing device B. But if there's no SSH server running on these machines A and B, then the network scanner C does not receive any response. The network scanner C doesn't know in advance whether or not it will receive answers in response to the TSL and/or SSH packets transmitted.

The scanning process 5100B performed by the system file scanning agent 1100B running on a specific computing device 2100 includes the steps of:
- scanning 5110B the system files of the computing device 2100, and
- detecting or identifying, and acquiring 5120B cryptography-related data elements in the scanned system files.

In another embodiment, the agent 1100B may additionally, or alternatively, scan other types of electronic files in the computing device 2100.

The cryptography-related data elements obtained from the system file scanning performed by the agent 1100B on the specific computing device 2100 may include part or all of the items or elements below:
- one or more raw digital certificate(s);
- one or more raw public key(s);
- one or more raw private key(s);
- a cryptographic library used by an application and/or executable (name of library, version); and
- function of this cryptographic library and related cryptosystem.

The scanning process 5100C performed by the source code scanning agent 1100C running on a specific computing device 2100 is similar to the scanning process 5100B, but concerns source code, or source code files, stored in the computing device 2100, instead of system files. The scanning process 5100C includes the steps of:
- scanning 5110C the source code files of the computing device 2100, and
- detecting or identifying, and acquiring 5120C cryptography-related data elements in the scanned system files.

The cryptography-related data elements obtained from the source code scanning performed by the agent 1100C on the specific computing device 2100 may include part or all of the items or elements below:
- one or more raw digital certificate(s);
- one or more raw public key(s);
- one or more raw private key(s);
- a cryptographic library used by an application and/or executable (name of library, version); and
- function of this cryptographic library and related cryptosystem.

The method may further comprise the following steps 5200 to 5700, carried out by the data collection module 1300.

In steps 5200A₁, 5200A₂, 5200B, 5200C, the collector 1310 receives cryptography-related data elements transmitted by the agents 1100A₁, 1100A₂, 1100B, 1100C, that have been acquired in the scans performed in the steps 5100A₁, 5100A₂, 5100A, 5100C. In an embodiment, the cryptography-related data elements are transmitted to the collector 1310 together with an associated additional information or metadata. The metadata associated with a specific cryptography-related data element acquired from a specific computing device 2100 may include for example, in a non-limitative manner:
- identification information of the computing device 2100 such as a hostname of the computing device 2100 (i.e., a label assigned to the computing device 2100 on the network 2200, like for example laptop, printer, or server01, that uniquely identifies the computing device 2100 on the specific network 2200);
- a port number or TCP (Transmission Control Protocol) port of the computing device 2100 through which the cryptography-related data element was acquired, if applicable;
- the type of scan performed to acquire this cryptography-related data element (e.g., network scan, system file scan or source code scan);
- scan time information, or scan date, indicative of the time when the scan was performed.

In this way, the collector 1310 collects the cryptography-related data elements of the plurality of computing devices 2100 obtained through the scans performed by the agents 1100A₁, 1100A₂, 1100B, 1100C, and optionally associated metadata.

In a step 5300, the collector 1310 transmits the cryptography-related data elements of the plurality of computing devices 2100 to the security check engine 1320. The collector 130 may transmit them together with the associated metadata.

In a step 5400, the security check engine 1320 carries out security checks on the cryptography-related data elements. For that purpose, the security check engine 1320 verifies or checks if the cryptography-related data elements satisfy the predetermined rules that are based on at least part of known security recommendations, known cryptographic attacks or threats and known vulnerabilities.

The security checks based on security recommendations performed on a cryptography-related data element may include verifying if the cryptography-related data element complies with said security recommendations, if applicable.

The security checks based on known cryptographic attacks performed on a cryptography-related data element may include verifying if the cryptography-related data element is resistant to said known cryptographic attacks, if applicable.

The security checks based on known cryptographic vulnerabilities performed on a cryptography-related data element may include verifying if the cryptography-related data element includes the known vulnerabilities, if applicable.

Illustrative and non-limitative examples of security checks are given below:
The security checks may include security checks related to RSA keys, including checks based on known attacks on public RSA keys and sanity checks (i.e., quick, initial checks or assessments to catch obvious errors or inconsistencies that could lead to problems or security vulnerabilities). Examples of the security checks related to RSA keys include:
- Fermat attack;
- ROCA attack;
- Shared primes;
- Small factors;
- Invalid key parameters;
- Unusual RSA exponent;
- Debian weak keys;
- Pollard p-1 attack;
- Low hamming weight attack;
- Key generated with unseeded PRNG test;
- Key factors are too close attack; and
- Continued fraction check.

The security checks may include security checks related to keys. Examples of these security checks include:
- whether they are SSH host keys or public keys inside certificates; and
- whether key length is at least as long as recommended (various recommendations from standards and/or guidelines may be used depending on the type of key).

The security checks may include security checks related to certificates. Examples of these security checks include:
- whether the certificate has expired, or will soon expire; and
- whether the certificate's validity period is not too long (i.e., above a predetermined threshold), because a too long validity period is bad.

The security checks may include security checks related to TLS protocol. Examples of these security checks include:
- whether the TLS version(s) supported by the computing device 2100 is not a too old version (i.e., older than a predetermined version) as older versions are less secure and should not be supported by the computing device 2100; and
- whether the TLS cipher suites supported by the computing device 2100 are believed to be secure based on how they are graded or evaluated.

The security checks may include security checks related to elliptic curve keys. Example of these security checks include:
- whether the public key point is on the elliptic curve (invalid curve attacks may happen otherwise).

The security checks may include security checks related to SSH protocol. Examples of these security checks include:
- whether the authentication methods supported by the computing device 2100 include weaknesses, errors and/or inconsistencies that could lead to security issues (e.g., password authentication should be disabled, and public-key authentication should only be used);
- whether the encryption algorithms supported by the computing device 2100 are believed to be secure based on how they are graded or evaluated;
- whether the key exchange algorithms supported by the computing device 2100 are believed to be secure based on how they are graded or evaluated;
- whether the MAC algorithms supported by the computing device 2100 are believed to be secure based on how they are graded or evaluated; and
- whether the host key algorithms supported by the computing device 2100 are believed to be secure based on how they are graded or evaluated.

In a step 5500, the security check engine 1320 may transmit to the collector 1310 results of the security checks performed on the cryptography-related data elements. The security check results related to a specific cryptography-related data element may be transmitted from the engine 1320 to the collector 1310 together with said specific cryptography-related data element and its associated metadata.

In a step 5600, the collector 1310 may transmit to and store in the database 1400 the cryptography-related data elements collected in the steps 5100A₁, 5100A₂, 5100B, 5100C and, for each cryptography-related data element, the associated metadata (optional) and the security check results for storage purpose.

Alternatively, the cryptography-related data elements acquired in the steps 5100A₁, 5100A₂, 5100B, 5100C and, for each cryptography-related data element, the associated metadata and the security check results may be directly transmitted from the engine 1320 to the database 1400.

In a step 5700, the security posture determination engine 1330 determines or computes a plurality of security metrics based on the collected cryptography-related data elements, the security check results, and optionally the associated metadata. The security metrics refer to quantifiable measures used to evaluate the performance, quality and/or effectiveness of the target system 2000 in security. A security metric can be defined as a measurement that quantifies a security aspect or parameter of the target system 2000. The security metrics may include statistics and/or numerical data including information and/or quantifying some aspects or parameters about the collected cryptography-related data elements. Examples of security metrics include:
- a total number of expired certificates detected in the target system 2000;
- a histogram representing key sizes of the keys detected in the target system 2000;
- for each type of cryptography-related data element (e.g., the types can include certificates, public keys, host keys, crypto suites, SSH algorithms, etc.), a total number of collected cryptography-related data elements of said type and a proportion, or a number, of these collected cryptography-related data elements that are evaluated to be weak;
- a histogram representing different levels of severity of the collected cryptography-related data elements (the term "severity" in cryptography referring to the seriousness or impact level of a vulnerability, flaw, or issue within a cryptographic system, algorithm, or implementation);
- identification of the most common weaknesses related to the different types of cryptography-related data elements in the target system 2000 (e.g., tls version, cipher suite, key length, certificate validity, etc.); and
- a score indicative of how the target system 2000 is resistant to security threats from a quantum computing device.

For example, the score of how the target system 2000 is resistant to security threats from a quantum computing device may be computed by calculating the proportion of cryptography-related data elements that are quantum-resistant among all the collected cryptography-related data elements. However, any other suitable mode de calculation may be used.

The security metrics may be computed or determined based on one scanning operation including the scans 5100A₁, 5100A₂, 5100B, 5100C, or based on different scanning operations successively performed over a given period of time.

The method may further include a step of transmitting information related to the security posture of the target system 2000 to the user device 3000, for example through the communication interface 1410, to present said information on a display device 3400 of the user device 3000. For example, the user device 3000 may connect to the database 1400 and exchange with it through the communication interface 1410 to receive data from the database 1400. The data from the database 1400 may be displayed through a user interface 3400 such as a display device of the user device 3000.

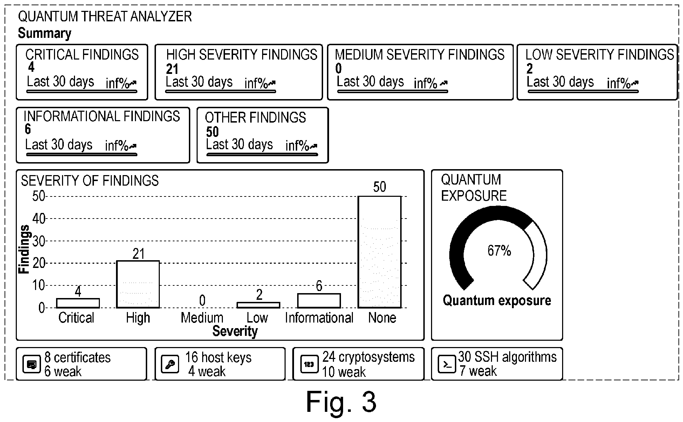

Figures 3 to 5 illustrate how the information related to the security posture of the target system 2000 may be presented on the display device 3400 of the user device 3000.

Figure 3 shows an histogram representing different levels of severity of the collected cryptography-related data elements including:
- critical severity level for cryptography-related data elements which severity is critical, in other words which have a vulnerability, flaw, or issue that is very highly serious;
- high severity level for cryptography-related data elements which severity is high, in other words which have a vulnerability, flaw, or issue that is highly serious but less than critical;
- medium severity level for cryptography-related data elements which severity is medium, in other words which have a vulnerability, flaw, or issue that is medium serious (less than high);
- low severity level for cryptography-related data elements which severity is low, in other words which have a vulnerability, flaw, or issue that is low serious (less than medium);
- informational severity level for cryptography-related data elements which are only informational with no severity, in other words, which have no vulnerability, flaw, or issue that is medium serious; and
- none severity level for cryptography-related data elements that have nothing wrong (e.g., a valid certificate having a quantum-resistant public key of large size).

Figure 3 (on the right) also shows a quantum exposure graph representing a quantum exposure score indicative of how the target system 2000 is exposed to security threats from a quantum computing device.

The histogram and the quantum exposure graph can be displayed on the user device 4000.

The bottom of Figure 3 also shows graphical representations of four different types of cryptography-related data element including (for example certificates, host keys, crypto suites, SSH algorithms), a total number of collected cryptography-related data elements of said type and a number of cryptography-related data elements among them that are evaluated to be weak.

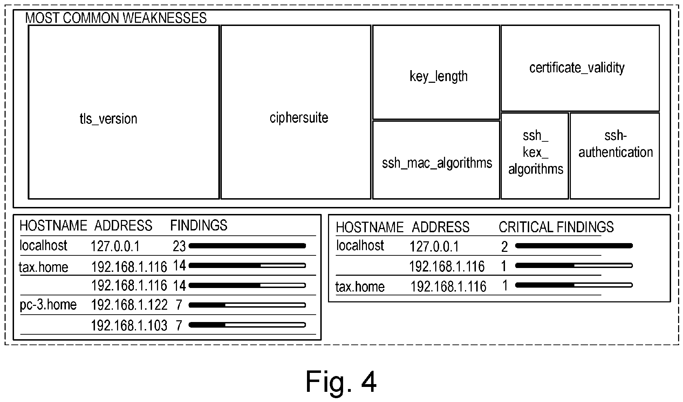

Figure 4 shows:
- the different types of cryptography-related data element having the most common weaknesses;
- a graphical representation of the numbers of all cryptography-related data elements obtained for different IP addresses corresponding to respective hostnames, and a graphical representation of the number of critical cryptography-related data elements obtained for part or all of the IP addresses and corresponding hostnames.

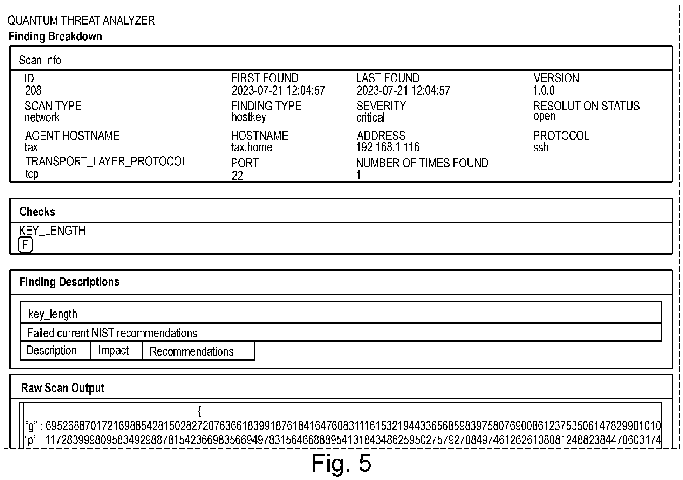

Figure 5 shows a graphical representation of a description of one cryptography-related data element. This description may include an identifier of the cryptography-related data element, that uniquely identifies said cryptography-related data element, the scan type through which it has been obtained, hostname information of the device computing device 2100 that has provided said cryptography-related data element, the transport layer protocol used by said device computing device 2100, the IP address where it has been first obtained, a port number on which it has been obtained, the type of said cryptography-related data element, time information when it has been first obtained and last obtained, a severity level of the cryptography-related data element, a number of times said cryptography-related data element has been obtained, the protocol used by the network scanning agent 1100A to obtain said cryptography-related data element, etc.

It should be noted that each cryptography-related data element is uniquely identified by a unique identifier. It may be obtained several times at different times by scans of the same time and/or through different types of scans.

Figure 5 also shows the security checks performed on the described cryptography-related data element (e.g., a check on the key length) and further details describing the results of said security check, together with recommendations to improve the check results and/or modify said cryptography-related data element so that is a more secure and for example has no severity. The bottom of figure 5 shows a partial graphical representation of the raw data of said cryptography-related data element.

The operations of method 5000 presented above are intended to be illustrative. Method 5000 may include one or more operations, functions, or actions, as illustrated by one or more of blocks and arrows. Although the blocks may be illustrated in a sequential order, these blocks may in some instances be performed in parallel, and/or in a different order than those described herein. Also, the various blocks may be combined into fewer blocks, divided into additional blocks, and/or removed based upon the desired implementation.

In addition, for the method 5000 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long-term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

In addition, for the method 5000 and other processes and methods disclosed herein, each block may represent circuitry that is wired to perform the specific logical functions in the process, for example.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method (5000) for monitoring security posture of a target system (2000) including a plurality of computing devices (2100), the method including the steps of:
- acquiring (5100A, 5100B, 5100C), by at least one agent (1100A, 1100B, 1100C), cryptography-related data elements from each of at least part of the plurality of computing devices (2100), each cryptography-related data element acquired from one of the plurality of computing devices (2100) being indicative of cryptographic capabilities of the computing device (2100);
- by a data collection module (1000), in communication with the at least one agent (1100A, 1100B, 1100C):
. collecting (5200A, 5200B, 5200C), from the at least one agent (1100A, 1100B, 1100C), the cryptography-related data elements,
. checking (5400) if the cryptography-related data elements satisfy predetermined rules that are based on at least part of security recommendations, known cryptographic attacks and known vulnerabilities, and
. based on the cryptography-related data elements and check results, determining (5500) information on the security posture of the target system (2000).

2. The method according to claim 1, wherein the at least one agent including at least one network agent (1100A), the step of acquiring (5100A) includes:
- querying (5110A), by the at least one network agent (1100A), each of at least part of the plurality of computing devices (5100) through a network (2200), and
- in response, receiving (5120A) data including the cryptography-related data elements.

3. The method according to claim 2, wherein the at least one network agent (1100A) queries (5110a) the computing devices (2100) at predetermined network addresses.

4. The method according to claim 3, wherein the target system (2000) including a computer network (2200) having a set of predetermined available network addresses that can be assigned on the computer network (2200), the at least one network agent (1100A) queries all the available network addresses of the set.

5. The method according to any of claims 1 to 4, wherein the at least one agent including at least one electronic file agent (1100B) running on at least one computing device, the step of acquiring (5100B) includes:
- scanning electronic files in the computing device (2100) to acquire the cryptography-related data elements from the scanned electronic files.

6. The method according to any of claims 1 to 5, wherein the at least one agent including at least one source code agent (1100C) running on at least one computing device (2100), the step of acquiring (5100C) includes:
- scanning source code in the computing device (2100) to acquire the cryptography-related data elements from the scanned source code.

7. The method according to any of claims 1 to 6, further comprising a step of sending a request for monitoring the target system (2000) from a user device (3000) to the at least one agent, and wherein the at least one agent performs the step of acquiring (5100A, 5100B, 5100C) upon reception of said request.

8. The method according to claim 7 when depending on claim 3, wherein the request includes said predetermined network addresses of the plurality of computing devices.

9. The method according to any of claims 1 to 8, including a step, performed by the data collection module (1000), of determining a plurality of security metrics based on the collected cryptography-related data elements and check results to determine said information on the security posture of the target system (2000).

10. The method according to claim 9, wherein the step of determining security metrics includes computing a score indicative of how the target system (2000) is resistant to security threats from a quantum computing device.

11. The method according to any of claims 1 to 10, including a step of storing in a database (1400):
- the cryptography-related data elements,
- metadata related to said cryptography-related data elements, the metadata related to one cryptography-related data element including information for identifying the corresponding computing device and/or locating the corresponding computing device on the target system and time information,
- the check results, and
- the information on the security posture of the target system (2000).

12. The method according to claim 11, including the steps of:
transmitting data from the database (1400) to a user device (3000), through a communication interface (1410); and
displaying said data through a user interface (3400) of the user device (3000).

13. A system (1000) for monitoring security posture of a target system (2000) including a plurality of computing devices (2100), said system (1000) comprising means for carrying out the steps of the method according to any of claims 1 to 11.

14. The system (1000) according to claim 13, comprising
- at least one agent (1100A, 1100B, 1100C) configured to acquire, cryptography-related data elements from each of at least part of the plurality of computing devices (2100), each cryptography-related data element acquired from one of the plurality of computing devices (2100) being indicative of cryptographic capabilities of the computing device (2100);
- a data collection module (1300), in communication with the at least one agent (1100A, 1100B, 1100C), configured to
. collect, from the at least one agent, the cryptography-related data elements,
. check if the cryptography-related data elements satisfy predetermined rules that are based on at least part of security recommendations, known cryptographic attacks and known vulnerabilities, and
. based on the cryptography-related data elements and check results, determine information on the security posture of the target system (2000).

15. A computer program comprising instructions to cause the system (1000) of claim 13 or 14 to execute the steps of the method of any of claims 1 to 12.
